# EUROPEAN PATENT APPLICATION

(11) **EP 1 591 933 A1**
(43) Date of publication of application: **02.11.2005**
(21) Application number: 04010116.4
(22) Date of filing: 28.04.2004
(51) Int. Cl.: G06F 17/60, G07F 19/00

(54) **A method and system for automated "delivery-versus-payment" settlements**

(71) Applicant: DEUTSCHE BÖRSE AG, 60487 Frankfurt am Main (DE)
(72) Inventor: Feldhoffer, Magdalena, Dr., 65812 Bad Soden am Taunus (DE); Haffner, Christian, Dr., 60439 Frankfurt am Main (DE); Kuhn, Michael, Dr., 60439 Frankfurt am Main (DE)
(74) Representative: Grünecker, Kinkeldey, Stockmair & Schwanhäusser Anwaltssozietät

(57) **Abstract**

The present invention provides an automated settlement system and method for receiving appropriate information, monitoring and controlling the timely interaction between the participants to settle trade and to guarantee the irrevocable and inseparable exchange of cash against securities. Two market participants which have agreed to exchange securities against cash forward their request to the automated settlement system of the present invention. The settlement system takes over control of the further procedure by initiating and monitoring a timely transfer of cash to a trust account, initiating and monitor the transfer of securities from the seller's securities deposit account to the buyer's securities deposit account, and to finally credit the seller's cash account. The central settlement system is responsible for involving and processing the interactions between the market participants, the custodians/((I)CSDs) and cash correspondent banks.

## Description

The present invention relates to an automated settlement method and system. In particular, the present invention relates to an automated settlement method and settlement system capable of settling obligations in cash and securities according to the Delivery-versus-Payment principle.

### BACKGROUND OF THE INVENTION

The explosive growth of the global securities markets places additional pressure on the market participants to ensure that trade settlements proceed with speed and accuracy. High speed trade settlements with high accuracy for cross-border transactions are even more important and challenging.

The increasing volume and speed with which securities are traded has necessitated governing bodies to place standards on financial institutions and other parties. In particular, a secure settlement requires the application of the Delivery-versus-Payment principle during settlement.

Currently, (International) Central Securities Depositories ((I)CSDs) or custodians provide a single point of access to a settlement system for settling securities trades of market participants. For cross-border transactions, the involved Central Securities Depositories or custodians and the cash correspondent banks have to interact with each other. For this purpose, direct links between the Central Securities Depositories and/or custodians are employed. In order to ensure a secure settlement, such links should not introduce any kind of settlement risks. A secure cross-border link can be achieved by applying the Delivery-versus-Payment principle.

During settlement, the involved parties need to maintain connections to each other. These connections may either be implemented in the form of direct links or by employing an intermediary. The connections differ significantly with respect to the technology employed, usage and processing. Further differences in the operating hours and settlement deadlines of the involved parties which may be located in different countries result in incompatible deadlines for matching and delivery in the different systems. Further difficulties stem from different information technologies and interfaces used. These differences in technology and processing impose substantial costs on the market participants by requiring investment in multiple technologies and often a higher level of manual input in transactions.

The application of the Delivery-versus-Payment principle through the settlement steps involving several financial institutions, such as Central Securities Depositories (CSDs) or custodians, implies high costs to the settlement process. For this reason, only a few Delivery-versus-Payment links between different CSDs are presently in use.

### SUMMARY OF THE INVENTION

The present invention aims to provide an automated settlement system and method enabling an efficient and secure settlement.

This is achieved by the features of the independent claims.

According to a first aspect of the present invention, a method for controlling the discharge of obligations, e.g. the settlement of executed trades, in an automated settlement system between settlement parties is provided. After receiving details of the obligations e.g. from executed trades or from any transaction resulting in an obligation to exchange cash against securities, the receipt of a payment to a trust account of the settlement system to be in accordance with the obligation is monitored. Upon validating receipt of the payment to the trust account being in accordance with the obligation, a security transfer in favour of a first settlement party is initiated. The trust account is debited in favour of a second settlement party.

According to a further aspect of the present invention, a settlement system for controlling an automated settlement of obligations between settlement parties is provided. The settlement system comprises an internal accounting system and a validation engine. The internal accounting system provides a trust account for the settlement of obligations. A validation engine monitors the receipt of payment to the trust account being in accordance with the obligation, initiates securities transfer in favour of a first settlement party upon validating receipt of the payment to the trust account, and debits the trust account in favour of a second settlement party.

It is the particular approach of the present invention to achieve an efficient and low-cost Delivery-versus-Payment settlement by decoupling the simultaneous exchange of cash and securities. This is achieved by the provision of a trust account enabling to deposit a received payment before delivery to the settlement party in order to await the secure transfer of the respective securities. Hence, a secure individual settlement of each partial transaction in conformity with the individual obligations of the involved member can be achieved.

The automated settlement system of the present invention guarantees a secure and irrevocable exchange of cash versus securities. This is achieved by enabling an escrow service in order to eliminate settlement risk. In this manner, the present invention in particular facilitates efficient and sound cross-border trade settlements in compliance with standardization requirements at great accuracy in a timely manner.

Preferably, a message engine is provided for notifying the settlement parties. Accordingly, each settlement party is provided with acknowledgements or requests depending on the progress of the settlement process.

Preferably, an event handler is provided for interrupting the settlement process. In case a mismatch of any received information, payment or transfer of securities is detected, the settlement process is interrupted and a reverse processing initiated, including a reimbursements of payments and re-transfer of securities. Accordingly, the settlement parties' risk in case of any failure occurring during the settlement process is removed.

Most preferably, the event handler notifies the involved settlement parties if the settlement process turns out to be unsuccessful.

Preferably, the validation engine includes a comparator for comparing whether or not details of the performed settlement steps are in accordance with the transaction details. If not, the event handler is activated accordingly. Thus, the automated settlement system of the present invention provides a secure infrastructure for performing Delivery-versus-Payment settlement.

Further, the automated settlement system of the present invention comprises a timer for monitoring a timely execution of the individual settlement steps. In case a settlement step is overdue, the event handler is notified accordingly. In this manner, an efficient and secure performance of the automated settlement can be guaranteed.

Preferably, the automated settlement system stores reference data needed for a sound performance of the settlement process. Accordingly, the automated settlement system automatically adapts to the individual requirements of any connected party, in particular financial institutions and market participants, and to meet settlement deadlines and operating hours of the involved parties. The automated settlement system of the present invention facilitates the settlement over tight time frames of overlapping operating hours of different parties and enables a provision of a global settlement platform.

Preferably, the internal accounting system implements the trust account by mirroring a bank account for receiving payments. Further, the internal accounting system most preferably represents an account structure for mirroring of deposit accounts of the settlement parties used for monitoring the transfer of securities. In this manner, the automated settlement system of the present invention enables a simple implementation of a secure settlement of multi-entity obligations. For example the automated settlement system can be used to provide an efficient and effective implementation of a cross-border settlement system.

According to a preferred embodiment, the automated settlement system records the status of settlement steps performed. By enabling the settlement parties to access the status register using the provided tracking system, each settlement party may monitor the progress of these steps of the settlement process which are related to it.

Further, the settlement system preferably includes interfaces for each of the connections in order to adapt the communication with individual parties involved in the settlement process to the employed technology. In this manner, the settlement system of the present invention enables the provision of a single global settlement platform enabling an efficient and secure discharge of obligations throughout the world. Complicated links needed to bridge different technologies and time zones are consequently dispensable.

Further preferred embodiments of the present invention are the subject matter of dependent claims.

### DESCRIPTION OF THE DRAWINGS

In the accompanying drawings, preferred embodiments of the present invention are described in more detail. The drawings are not to be construed as limiting the present invention to only the illustrated and described examples of how the invention can be made and used. Further features and advantages will become apparent from the following and more particular description of the invention which is illustrated in the accompanying drawings, wherein:
- Fig. 1: illustrates in block diagram form a simplified configuration of an automated settlement system in accordance with the present invention;
- Fig. 2: illustrates a flowchart of the different phases of the automated settlement process in accordance with the present invention;
- Fig. 3: illustrates the settlement steps of the initialization phase shown in Fig. 2 in more detail;
- Fig. 4: illustrates the settlement steps performed during a first cash transfer phase shown in Fig. 2 in more detail;
- Fig. 5: illustrates the settlement steps of the securities transfer phase shown in Fig. 2 in more detail;
- Fig. 6: illustrates the settlement steps of the second cash transfer phase shown in Fig. 2 in more detail; and
- Fig. 7: illustrates the steps performed during the event handling for the unsuccessful transfer of securities.

### DETAILED DESCRIPTION OF THE INVENTION

The different aspects of the present invention will be described in the following with reference to the accompanying figure drawings, wherein like elements and structures are designated by corresponding reference numerals.

The clearing and settlement process provides an efficient and secure transfer of ownership from the seller to the buyer. In this manner, the settlement process is essential for a sound functioning of security markets. The main steps performed by the settlement process are:
- confirmation of the terms of the securities trade;
- clearance of the trade, i.e. to establish the obligations of the buyer and the seller;
- payment of funds;
- delivery of the securities and reciprocal.

When both payment and delivery are finalized, a settlement of the securities transactions has been achieved irrevocably. In order to enable a secure settlement for all of the involved parties, preferably the Delivery-versus-Payment principle is applied. Accordingly, the two legs of a transaction have to be settled simultaneously such that the one cannot occur without the other.

Cross-border settlements of securities have to cope with additional drawbacks as different parties from the private as well as the public sectors are involved. A fundamental key factor is the transfer of money in the clearing and settlement process. Money is fundamental to the functioning of the clearing and settlement process in as much as these are based on exchange and credit. The money used here can be commercial bank money as well as central bank money. In a market economy, any two market participants are free to agree on the means of payment to be used to settle a transaction.

Central bank money plays an important role in the clearing and settlement process of securities in several countries. The present invention facilitates a secure transfer of security against central bank money as well as commercial bank money regardless whether this is a domestic or cross-border transaction. The Guarantee Trust Account System (GTA System) of the present invention meets the following main objectives:
- a provision of a safe and reliable mechanism for the settlement of transactions (by applying the Delivery-versus-Payment principle), and
- cross-border clearing and settlement processes of increased efficiency.

The present invention provides an efficient settlement system to facilitate a secure process for use by market participants for improving the speed and accuracy thereof. For this purpose, the present invention implements a Guarantee Trust Account System and method including a message engine, a validation engine, a timer, an event handler, an internal accounting system and databases. The message engine is provided as the settlement process involves a set of communications by which the parties to the trade send and receive messages that manage and control the settlement process. The validation engine serves for comparing the received information and the timer controls the interactions to be in accordance with time constraints. The event handler performs the necessary process caused upon occurrence of several events. The internal accounting system serves for book-keeping and the databases for storing and managing Delivery-versus-Payment notices, parties' reference data, account information and status information. Further, the present invention includes a tracking system for the parties to monitor the current status of the settlement process.

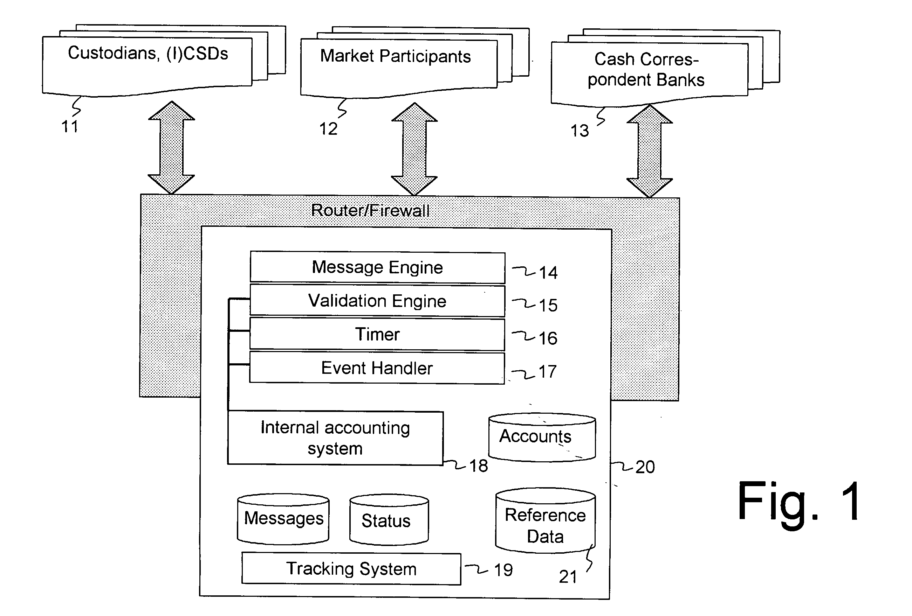

A general configuration of the settlement system according to the present invention is illustrated in Fig. 1. The Guarantee Trust Account System (GTA System), i.e. the automated settlement system of the present invention, is connected to market participants (12), custodians and/or (International) Central Securities Depositories (11) and cash correspondent banks (13). Accordingly, the automated settlement system is connected to the involved parties, preferably by employing a network such as the Internet, SWIFT or private communication links. The automated settlement system includes a message engine (14), a validation engine (15), a timer (16), an event handler (17), an internal accounting system (18), a tracking system (19), and several databases for storing required data, for instance a reference database (21).

Although not shown in Fig. 1, the parties involved in the settlement process, i.e. the market participants (12), the custodians and Central Securities Depositories (11) and the cash correspondent banks (13), are provided with an input unit as well as an output unit for communicating settlement particulars. The parties further make use of a transceiver unit for transmitting and receiving information to and from the automated settlement system (20) via the network.

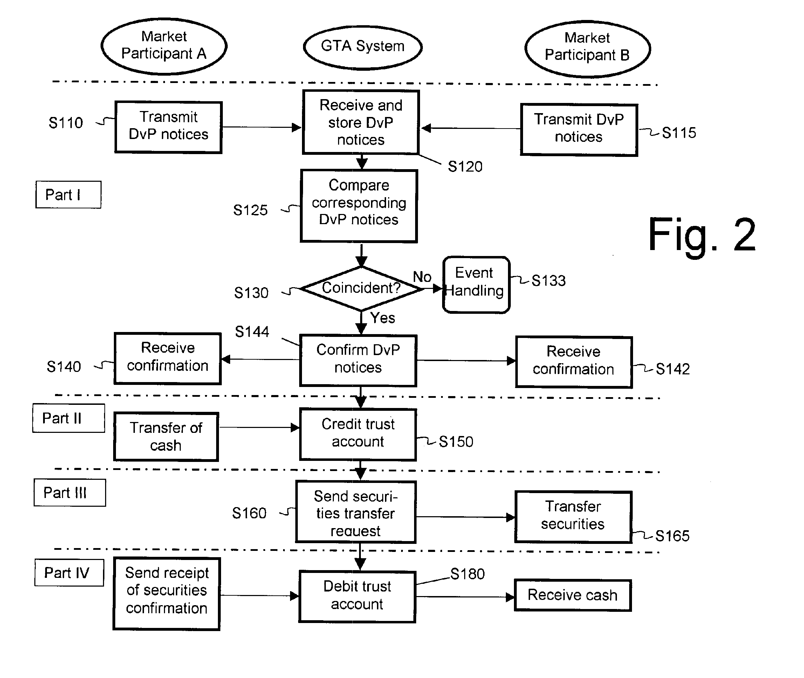

The settlement process executed by the automated settlement system (20) will now be described in connection with Figs. 2 to 7.

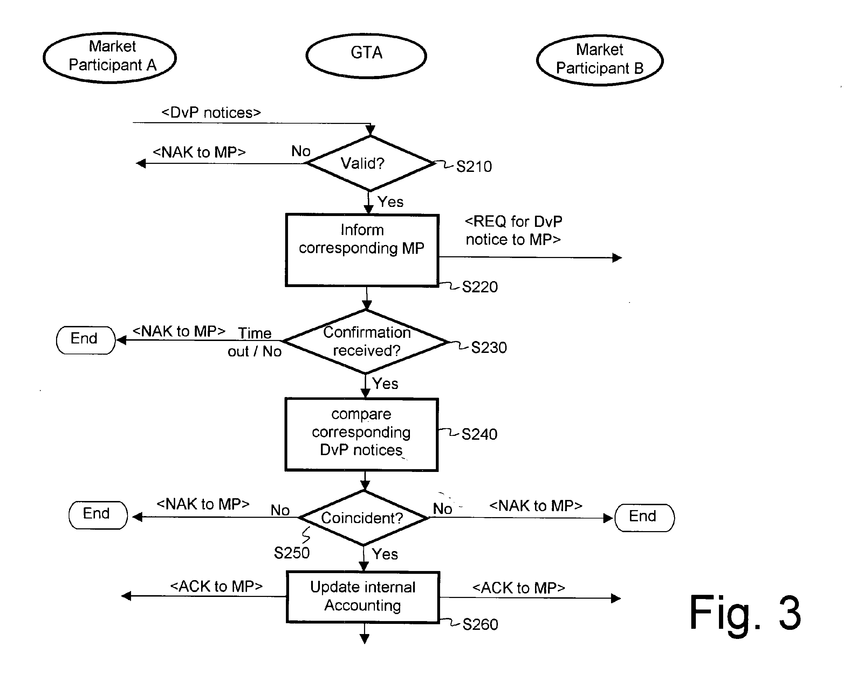

Fig. 2 illustrates a general overview over the settlement process performed in accordance with the present invention. The settlement process includes four separate phases I to IV which will be described in more detail in Figs. 3 to 6. For the description, it is assumed that market participant A (MP A) acts as a buyer and has to pay cash in order to receive the securities and market participant B (MP B) acts as a seller and has to deliver the securities against cash.

Figs. 2 to 6 illustrate the operation performed by the automated settlement system (20) and its interrelationship with the respective market participants in separate columns. The different processing stages are arranged vertically and designated *"Part I"* to *"Part IV".*

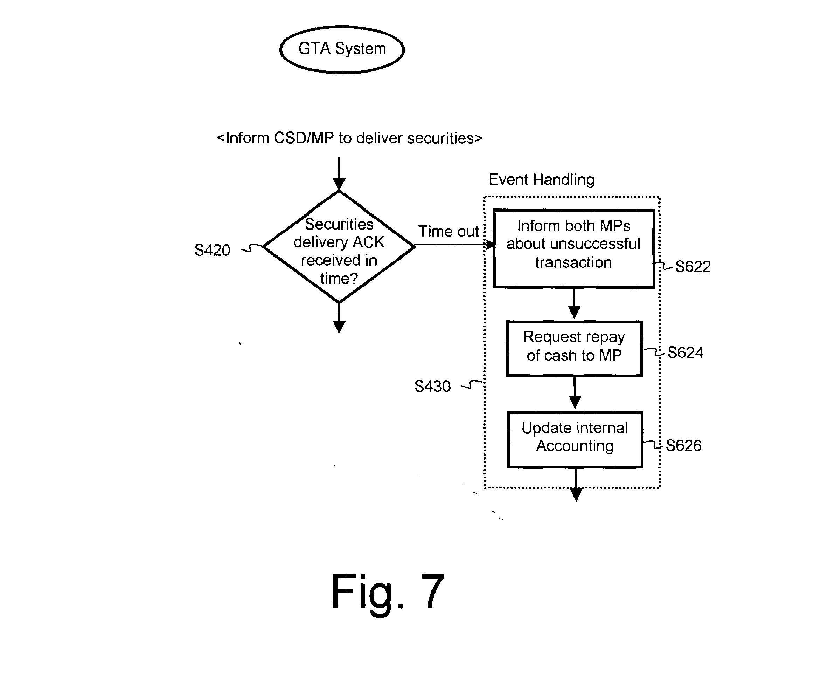

Part I designates the initialization phase. The initialization phase is characterised by first receiving notices from both market participants A, B (S110, S115) instructing the settlement system to perform a Delivery-versus-Payment settlement based on the enclosed transaction details. After having received the instructions from both market participants (S120), the automated settlement system (20) stores the notices and determines in step S125 whether or not the corresponding notices received from the market participants match. If it turns out that the notices do not match in step S130, an event handling (S133) is initiated. The event handling interrupts the settlement process and notifies the market participants accordingly. For a special event a more detailed explanation of the event handling is given below in connection with Fig. 7.

If the transaction details received from both market participants match, the automated settlement system (20) informs the market participants accordingly in step S144. Both market participants receive a respective confirmation (S140, S142) that the settlement process now proceeds with stage II of the settlement process, i.e. a first cash transfer phase.

In the first cash transfer phase designated *"Part II",* the automated settlement system (20) awaits a payment from the market participant A in favour of the trust account in step S150. Upon a timely receipt of the respective payment, the settlement process proceeds to settlement stage III, i.e. the securities transfer phase.

In the securities transfer phase designated "*Part III",* the market participant B is requested to transfer the securities in step S160. Upon ascertaining that the securities have been transferred in accordance with the transaction details, the settlement process proceeds with final stage IV, i.e. the second cash transfer phase.

The second cash transfer phase designated "*Part IV*" debits the trust account in favour of the market participant B in step S180. Upon having successfully transferred the payment to the seller, the settlement process has been successfully completed.

Fig. 3 illustrates in more detail the steps performed during the initialization phase. The automated settlement process starts with receipt and storage of transaction details for Delivery-versus-Payment settlement sent by the market participants to the settlement system. First, a notice for market participant A is received and validated by the settlement system in step S210. If any incorrectness is detected, the settlement system rejects the notice by sending a negative acknowledgement NAK to market participant A.

If the notice received from market participant A is validated, it is checked whether the corresponding notice form MP B is already received. If not, a request (either at once or after a certain time frame which is monitored by the timer 16) is sent by the message engine 14 to market participant B in step S220 for receiving the corresponding settlement notice. Further, timer 16 is activated in order to monitor whether or not the response from market participant B is received in time. The time of timer 16 is set in accordance with the required settlement date stored in reference database 21.

A negative acknowledgement NAK is sent to the market participant A and the settlement process is terminated in case the response from market participant B is timed out or, alternatively, a negative response is received from market participant B (S230).

If a notice from market participant B is received, the trade details are compared to those of the notice received from market participant A in step S240. If both notices, i.e. those from market participants A and B, match, the automated settlement system 20 updates its internal accounting system 18 and confirms the commencing of the settlement process to both of the market participants (steps S250, S260). If a mismatch is detected, both market participants receive a negative acknowledgement and the settlement process is terminated (S250).

As an alternative the automated settlement system is also able to process notices sent by both settlement parties simultaneously. In this case, the related notices are validated, compared and stored. If both notices match, MP A and MP B get an acknowledgment from the GTA system and the process proceeds with step S260. If not (S250), they are informed by a negative acknowledgement and the process is terminated.

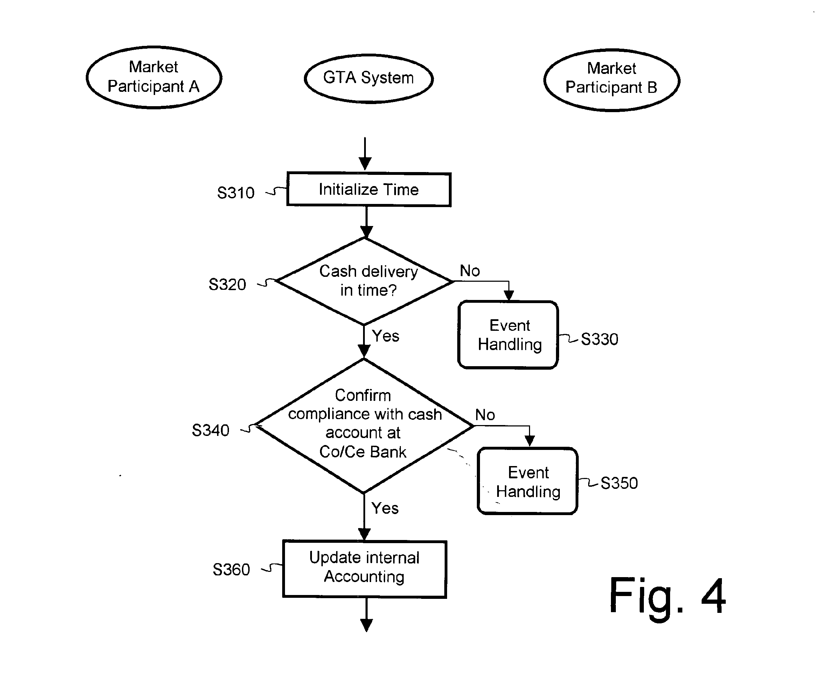

In case the initialization phase has been successfully completed, the settlement process enters the first cash transfer phase. The details thereof are illustrated in Fig. 4.

At the beginning of the first cash transfer phase, timer 16 is started in order to monitor save receipt of the payment on the settlement system's trust account (step S310). In case the settlement system's trust account is timely credited (step S320), the received payment is compared to the requested quantity and quality (for instance currency, value date, etc.) in step S340. If the received payment matches the transaction details, the settlement system updates the internal accounting system 18 (step S360) and informs the other market participant B of the correct receipt of cash. At the same time, or alternatively as the first step of the following settlement phase, market participant B is requested to transfer the respective securities.

If either the payment is not received in time or the quantity, or quality does not match the required transaction details (as determined in steps S320, S340), the settlement system initiates a respective event handling (S330, S350). If the payment is not received in time (step S320), an event handling in accordance with step S330 is initiated. Accordingly, the settlement process is terminated and the market participants are notified.

In case the received payment does not match the requested quality or quantity (step S340), the automated settlement system initiates different actions depending on the detected kind of discrepancy. The event handling (S350) may either request the market participant to correct or complete the payment within a determined time frame or, alternatively, the settlement process is terminated accordingly.

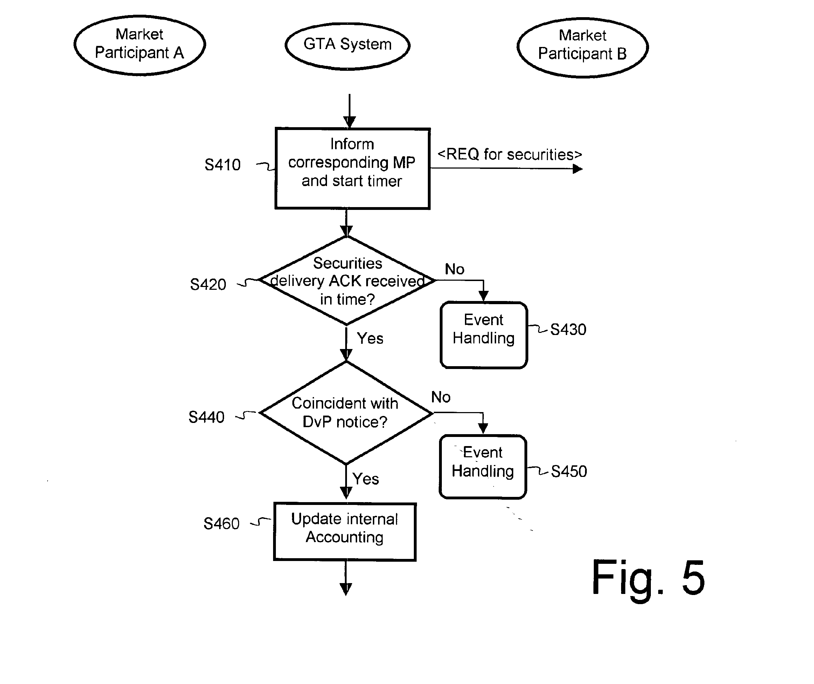

In case the payment has been received successfully, the securities transfer phase is entered which is illustrated in detail in Fig. 5. Market participant B is notified about a successful receipt of cash from the other market participant. Further, market participant B is requested to transfer the corresponding securities in favour of the securities deposit account of market participant A (S41 0) within a certain time frame which is monitored by the timer 16.

The securities transfer is performed via a free-of-payment instruction. A free-of-payment link employed for such instructions is usually implemented between custodians and/or (International) Central Securities Depositories.

If the securities have been received in time, the automated settlement system compares the quantity and quality of the transferred securities with the transaction details provided in the settlement instruction notices. If the quality and quantity of the transferred securities match the requirements (step S440), the internal accounting system 18 is updated accordingly in step S460.

In contrast, if the transferred securities are not received in time, an event handling (step S430) is initiated. If securities are transferred, but the transferred securities do not match the required quantity or quality, an event handling in accordance with step S450 is initiated. The event handling determines the kind of discrepancy and may perform further actions so as to receive a successful security transfer to the securities deposit account of market participant A. Alternatively, the event handling may terminate the settlement process by reimbursing the already received payment to market participant A. Both market participants are notified accordingly and the settlement process is terminated.

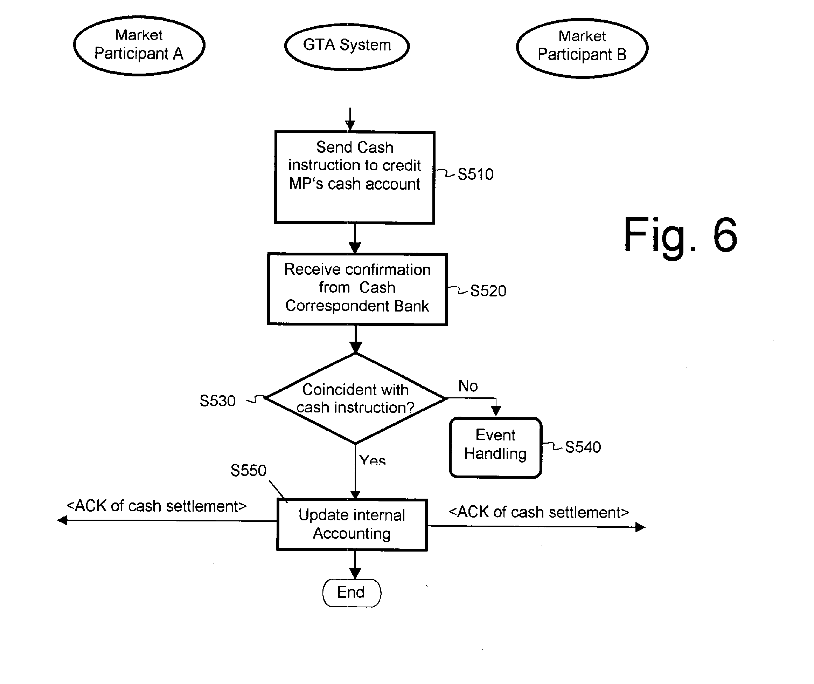

If the security transfer has been completed successfully (step S460), the second cash transfer phase is initiated. The second cash transfer phase is illustrated in more detail in Fig. 6.

As illustrated in Fig. 6, a cash instruction is sent to the cash correspondent bank in order to debit its trust account in favour of a payment to the account of market participant B (step S510). After receipt of a confirmation from the cash correspondent bank in step S520, the cash transfer is checked in order to be in compliance with the initial cash instructions (step S530). If the confirmation received from the cash correspondent bank is in compliance with the initial instructions, the automated settlement system's internal accounting system 18 is updated and both market participants are informed accordingly (step S550). The settlement process is successfully completed.

In contrast, if any inconsistencies are detected between the confirmation from the cash correspondent bank and the initial cash instruction, the settlement system initiates an event handling (step S540). Depending on the kind of inconsistency, the settlement system interacts with the cash correspondent bank in order to arrive at a successful cash transfer.

An example illustrating the processing performed by the event handling is illustrated in Fig. 7. The illustrated event handling relates to a monitored timed out for receiving a securities transfer determined in step S420. The event handling (S430) first notifies both market participants A, B about the unsuccessful transaction in step S622. The payment is reimbursed to the market participant in step S624, the internal accounting system 18 is updated in step S626 and the settlement process is terminated.

The database 21 provided in the automated settlement system 20 of the present invention provides information required for the transformation tasks for use by the automated settlement system during the settlement process. These data include, for instance, the operating hours and the settlement deadlines of the involved parties, access information (for instance connection time information like fax, online, phone, file transfer) or request and response message structure and handling, address information, technology and interface information, etc.

In order to settle the securities transaction in the required time frame, the settlement system coordinates the necessary activities of the involved parties. This coordination is mainly based on an interaction between the timer 16 and the event handler 17 of the automated settlement system. Each change of the internal status, for instance triggered by updates of the internal accounting system, leads to a set up of an appropriate timer 16. The timer 16 triggers a suitable event of the event handler 17 depending on the outcome of the related process step of the settlement procedure. In this manner, the automated settlement system is enabled to monitor, control and coordinate the required activities of the involved parties.

Further, the automated settlement system replaces a plurality of interconnections between each of the parties by a single connection between each of the party and the settlement system. Thus, the settlement system of the present invention provides a converter for transforming messages received from any of the parties to be sent to another party.

Further, the conversion task includes the handling of a global settlement process necessitating a settlement process over several time zones including different operating hours and settlement deadlines. In this manner, the selection of a common operating hour window applicable to all of the involved parties in order to achieve a settlement is not required. Moreover, the automated settlement system of the present invention bears the effort for handling different information technologies and interfaces of the involved parties and provides suitable adjustments and interfaces. Hence, process and technology changes in national systems only have to be adopted by the settlement system, but not by each of the market participant itself. The market participants are shielded from particularities and differences caused by other members or parties involved in the settlement process by the Global Trust Account System of the present invention.

Market participants are further able to monitor the status of their settlement process at any time. For this purpose, the automated settlement system 20 of the present invention provides a tracking system 19 included therein. The tracking system 19 mirrors the internal status of the performed tasks of the settlement process and provides this information to a market participant upon request. Each market participant employs its own interaction unit (an interface like a web application or terminal unit) in order to request and receive timely status information about the progress of the settlement process. Although the tracking system is mainly used by market participants it can also be used by the other involved parties if desired.

The settlement system and method of the present invention reduces the effort and improves the efficiency for processing securities settlements, especially with respect to cross-border settlements, for the different parties involved. In particular, the number of required interactions and coordination steps between the parties is reduced, the number of successful settlement transactions increased, the fee to be paid by market participant to the custodians, Central Securities Depositories and cash correspondent banks lowered, and tight time frames of overlapping operating hours of different parties eased. The present invention provides a secure infrastructure for performing Delivery-versus-Payment (DvP) settlements for market participants, a global settlement platform, information sources and an internal accounting system in order to support a secure and sound settlement and especially cross-border secure settlements. The automated settlement system of the present invention coordinates and records the Delivery-versus-Payment instructions associated with the obligations for settlement. The settlement system can be utilised for execution of Delivery-versus-Payment settlements and can be accessed through several communication interfaces by market participants, custodians, CSDs and cash correspondent banks.

The settlement system and method of the present invention act as a hub for substituting the current complex and costly interaction activities between the involved, distributed parties by a more efficient and standardized interaction process. For this purpose, a centralized entity performs the required transformation tasks. A tracking system which is based on the internal accounting system enables to timely track the processing status of the Delivery-versus-Payment instructions by the market participants.

Summarizing, the present invention provides an automated settlement system and method for receiving appropriate information, monitoring and controlling the timely interaction between the participants to settle trade and to guarantee the irrevocable and inseparable exchange of cash against securities. Two market participants which have agreed to exchange securities against cash forward their request to the automated settlement system of the present invention. The settlement system takes over control of the further procedure by initiating and monitoring a timely transfer of cash to a trust account, initiating and monitor the transfer of securities from the seller's securities deposit account to the buyer's securities deposit account, and to finally credit the seller's cash account. The central settlement system is responsible for involving and processing the interactions between the market participants, the custodians/((I)CSDs) and cash correspondent banks.

While the invention has been described with respect to the physical embodiments constructed in accordance therewith, it will be apparent to those skilled in the art that various modifications, variations and improvements of the present invention may be made in light of the above teachings and with the purview of the appended claims without departing from the intended scope of the invention. In addition, those areas in which it is believed that those of ordinary skill in the art are familiar, have not been described herewith in order not to unnecessarily obscure the invention described herein. Accordingly, it is to be understood that the invention is not to be limited to the specific illustrated embodiments, but only by the scope of the appended claims.

## Claims

1. A method for controlling the discharge of obligations in an automated settlement system between market participants, comprising the steps of:
receiving (S120) details of obligations,
monitoring (S150) receipt of a payment to a trust account of the settlement system to be in accordance with the obligations,
initiating (S160) a securities transfer in favor of a first market participant upon validating receipt of said payment to said trust account being in accordance with the obligations, and
debiting (S180) said trust account in favor of a second market participant.

2. A method according to claim 1, wherein said receiving step (S120) receiving transaction details from both market participants involved.

3. A method according to claim 1 or 2, wherein said transaction details include instructions for a delivery-versus-payment settlement.

4. A method according to any of claims 1 to 3, further comprising the step of comparing (S240) the transaction details received from both market participants and interrupting the settlement process if the transaction details do not match.

5. A method according to claim 4, further comprising the step of notifying (S250) both market participants of an unsuccessful settlement if the received transaction details do not match.

6. A method according to claim 4 or 5, further comprising the step of notifying (S260) both market participants of commencing the settlement process if the received transaction details match.

7. A method according to any of claims 1 to 6, wherein said step of initiating (S160) a securities transfer including the step of requesting (S410) said second market participant to transfer the securities in accordance with the transaction details.

8. A method according to any of claims 1 to 7, wherein said step of initiating (S160) a securities transfer including the step of comparing (440) the transferred securities with the transaction details and proceed with the settlement process if the transferred securities match the transaction details.

9. A method according to claim 8, wherein said step of initiating (S160) a securities transfer further including the step of interrupting the settlement process if the transferred securities do not match the transaction details.

10. A method according to claim 9, wherein said step of initiating (S160) a securities transfer further including the step of notifying (S622) the market participants about the unsuccessful settlement if the securities have not been transferred in time.

11. A method according to any of claims 1 to 10, further comprising the step of actuating (S310, S410) a timer (16) for monitoring a timely execution of said settlement steps.

12. A method according to claim 11, wherein said timer (16) monitors the timely execution of said payment to said trust account and/or of said transfer of securities.

13. A method according to claim 11 or 12, further comprising the steps of interrupting the settlement process and notifying (S622) the market participants accordingly upon detecting a settlement step being overdue.

14. A method according to any of claims 12 to 14, wherein said timer (16) being set in accordance with stored reference data, including operating hours of the respective financial institutions involved in the settlement process and/or settlement deadlines.

15. A method according to any of claims 1 to 15, wherein said trust account is mirrored by an internal accounting system (18) of said automated settlement system for monitoring received payments.

16. A method according to claim 15, wherein said internal accounting system (18) further mirroring a deposit account of a market participant for monitoring the transfer of securities.

17. A method according to any of claims 1 to 16, further comprising the step of updating a status register in accordance with the progression of the settlement process.

18. A method according to claim 17, wherein said status register being accessible by the settlement parties to monitor the current status of the settlement process of their trade using the tracking system (19).

19. A method according to any of claims 1 to 18, further comprising the step of converting the information for exchange with the individual parties, in particular the market participants and the financial institutions, in accordance with the technology used by the respective party.

20. A settlement system for controlling an automated settlement of obligations between market participants, comprising:
an internal accounting system (18) providing a trust account for the settlement of obligations, and
a validation engine (15) for monitoring a receipt of payment to the trust account being in accordance with the executed trade, initiating a securities transfer in favor of a first market participant upon validating receipt of said payment to said trust account, and debiting said trust account in favor of a second market participant.

21. A settlement system according to claim 20, further including a message engine (14) for notifying the involved parties.

22. A settlement system according to claim 20 or 21, wherein said transaction details include instructions for a delivery-versus-payment settlement.

23. A settlement system according to any of claims 20 to 22, further comprising an event handler (17) for interrupting the settlement process.

24. A settlement system according to claims 23, wherein said event handler (17) further notifying the market participants about an unsuccessful settlement of their obligations.

25. A settlement system according to any of claims 20 to 23, wherein said validation engine (15) including a comparator for comparing the transaction details received from both market participants.

26. A settlement system according to claim 25, wherein said comparator actuating said event handler (17) if the transaction details do not match.

27. A settlement system according to claim 25 or 26, wherein said comparator notifying both market participants of commencing the settlement process if the received transaction details match.

28. A settlement system according to any of claims 20 to 27, wherein said message engine (14) requesting said second market participant to transfer the securities in accordance with the transaction details.

29. A settlement system according to any of claims 20 to 28, wherein said validation engine (15) including a comparator for comparing the transferred securities with the transaction details.

30. A settlement system according to claim 29, wherein said comparator actuating said event handler (17) if the transferred securities do not match the transaction details.

31. A settlement system according to any of claims 20 to 30, further comprising a timer (16) for monitoring a timely execution of the settlement steps.

32. A settlement system according to claim 31, wherein said timer (16) monitors the timely execution of said payment to said trust account and/or of said transfer of securities.

33. A settlement system according to claim 31 or 32, wherein said timer (16) actuating said event handler (17) upon detecting a settlement step being overdue.

34. A settlement system according to any of claims 31 to 33, further comprising a memory (21) for storing reference data, including operating hours of respective financial institutions involved in the settlement process and/or settlement deadlines for setting said timer (16) in accordance with said stored reference data.

35. A settlement system according to any of claims 20 to 34, further comprising an internal accounting system (18) for implementing said trust account by mirroring a bank account for receiving payments.

36. A settlement system according to claim 35, wherein said internal accounting system (18) further mirroring a deposit account of a market participant for the transfer of securities.

37. A settlement system according to any of claims 20 to 36, further comprising a tracking system (19) and status register for recording the progress of the settlement process.

38. A settlement system according to claim 37, wherein said tracking system (19) being accessible by the settlement parties to monitor the settlement process of their obligations.

39. A settlement system according to any of claims 20 to 38, being connected to the market participants and to the financial institutions involved into the settlement process.

40. A settlement system according claim 39, comprising an interface for each connection to adapt the communication to the technology used by the connected parties.

## Amended claims

### Amended claims in accordance with Rule 86(2) EPC.

**1.** A method for controlling the discharge of obligations in an automated settlement system between market participants, comprising the steps of:
receiving (S120) details of obligations, and
initiating (S160) a securities transfer in favor of a first market participant
**characterized in that**
a receipt of a payment to a trust account of the settlement system to be in accordance with the obligations is monitored (S150) before initiating (S160) a securities transfer,
a securities transfer in favor of the first market participant is only initiated (S160) upon validating receipt of said payment to said trust account being in accordance with the obligations, and
said trust account is debited (S180) in favor of a second market participant.

**2.** A method according to claim 1, wherein said receiving step (S120) receiving obligation details from both market participants involved.

**3.** A method according to claim 1 or 2, wherein said obligation details include instructions for a delivery-versus-payment settlement.

**4.** A method according to any of claims 1 to 3, further comprising the step of comparing (S240) the obligation details received from both market participants and interrupting the discharge process if the obligation details do not match.

**5.** A method according to claim 4, further comprising the step of notifying (S250) both market participants of an unsuccessful settlement if the received obligation details do not match.

**6.** A method according to claim 4 or 5, further comprising the step of notifying (S260) both market participants of commencing the discharge process if the received obligation details match.

**7.** A method according to any of claims 1 to 6, wherein said step of initiating (S160) a securities transfer including the step of requesting (S410) said second market participant to transfer the securities in accordance with the obligation details.

**8.** A method according to any of claims 1 to 7, wherein said step of initiating (S160) a securities transfer including the step of comparing (440) the transferred securities with the obligation details and proceed with the discharge process if the transferred securities match the obligation details.

**9.** A method according to claim 8, wherein said step of initiating (S160) a securities transfer further including the step of interrupting the discharge process if the transferred securities do not match the obligation details.

**10.** A method according to claim 9, wherein said step of initiating (S160) a securities transfer further including the step of notifying (S622) the market participants about the unsuccessful discharge of obligations if the securities have not been transferred in time.

**11.** A method according to any of claims 1 to 10, further comprising the step of actuating (S310, S410) a timer (16) for monitoring a timely execution of said discharge steps .

**12.** A method according to claim 11, wherein said timer (16) monitors the timely execution of said payment to said trust account and/or of said transfer of securities.

**13.** A method according to claim 11 or 12, further comprising the steps of interrupting the discharge process and notifying (S622) the market participants accordingly upon detecting a discharge step being overdue.

**14.** A method according to any of claims 12 to 13, wherein said timer (16) being set in accordance with stored reference data, including operating hours of the respective financial institutions involved in the discharge process and/or settlement deadlines.

**15.** A method according to any of claims 1 to 14, wherein said trust account is mirrored by an internal accounting system (18) of said settlement system for monitoring received payments.

**16.** A method according to claim 15, wherein said internal accounting system (18) further mirroring a deposit account of a market participant for monitoring the transfer of securities.

**17.** A method according to any of claims 1 to 16, further comprising the step of updating a status register in accordance with the progression of the discharge process.

**18.** A method according to claim 17, wherein said status register being accessible by the settlement parties to monitor the current status of the discharge process of their obligations using the tracking system (19).

**19.** A method according to any of claims 1 to 18, further comprising the step of converting the information for exchange with the individual parties, in particular the market participants and the financial institutions, in accordance with the technology used by the respective party.

**20.** A settlement system for controlling an automated discharge of obligations between market participants, comprising:
an internal accounting system (18)
**characterized in that**
said internal accounting system (18) providing a trust account for the discharge of obligations, and
said settlement system further comprising a validation engine (15) for monitoring a receipt of payment to the trust account being in accordance with the obligations, initiating a securities transfer in favor of a first market participant upon validating receipt of said payment to said trust account, and debiting said trust account in favor of a second market participant.

**21.** A settlement system according to claim 20, further including a message engine (14) for notifying the involved parties.

**22.** A settlement system according to claim 20 or 21, wherein said obligation details include instructions for a delivery-versus-payment settlement.

**23.** A settlement system according to any of claims 20 to 22, further comprising an event handler (17) for interrupting the discharge process.

**24.** A settlement system according to claim 23, wherein said event handler (17) further notifying the market participants about an unsuccessful discharge of their obligations.

**25.** A settlement system according to any of claims 20 to 23, wherein said validation engine (15) including a comparator for comparing the obligation details received from both market participants.

**26.** A settlement system according to claim 25, wherein said comparator actuating said event handler (17) if the obligation details do not match.

**27.** A settlement system according to claim 25 or 26, wherein said comparator notifying both market participants of commencing the discharge process if the received obligation details match.

**28.** A settlement system according to any of claims 20 to 27, wherein said message engine (14) requesting said second market participant to transfer the securities in accordance with the obligation details.

**29.** A settlement system according to any of claims 20 to 28, wherein said validation engine (15) including a comparator for comparing the transferred securities with the obligation details.

**30.** A settlement system according to claim 29, wherein said comparator actuating said event handler (17) if the transferred securities do not match the obligation details.

**31.** A settlement system according to any of claims 20 to 30, further comprising a timer (16) for monitoring a timely execution of the discharge steps.

**32.** A settlement system according to claim 31, wherein said timer (16) monitors the timely execution of said payment to said trust account and/or of said transfer of securities.

**33.** A settlement system according to claim 31 or 32, wherein said timer (16) actuating said event handler (17) upon detecting a discharge step being overdue.

**34.** A settlement system according to any of claims 31 to 33, further comprising a memory (21) for storing reference data, including operating hours of respective financial institutions involved in the discharge process and/or settlement deadlines for setting said timer (16) in accordance with said stored reference data.

**35.** A settlement system according to any of claims 20 to 34, further comprising an internal accounting system (18) for implementing said trust account by mirroring a bank account for receiving payments.

**36.** A settlement system according to claim 35, wherein said internal accounting system (18) further mirroring a deposit account of a market participant for the transfer of securities.

**37.** A settlement system according to any of claims 20 to 36, further comprising a tracking system (19) and status register for recording the progress of the discharge process.

**38.** A settlement system according to claim 37, wherein said tracking system (19) being accessible by the settlement parties to monitor the discharge process of their obligations.

**39.** A settlement system according to any of claims 20 to 38, being connected to the market participants and to the financial institutions involved into the discharge process.

**40.** A settlement system according claim 39, comprising an interface for each connection to adapt the communication to the technology used by the connected parties.
